# EUROPEAN PATENT SPECIFICATION

(11) **EP 2 563 522 B1**
(45) Date of publication and mention of the grant of the patent: **19.04.2017**
(21) Application number: 11774485.4
(22) Date of filing: 28.04.2011
(51) Int. Cl.: B03D 1/02, C22B 7/00, C22B 11/00, C22B 13/00, C22B 3/00

(54) **METHOD FOR RECOVERING VALUABLE METALS**
VERFAHREN ZUR WIEDERGEWINNUNG WERTVOLLER METALLE
PROCÉDÉ DE RÉCUPÉRATION DE MÉTAUX PRÉCIEUX

(30) Priority: 30.04.2010 FI 20100184
(43) Date of publication of application: 06.03.2013
(73) Proprietor: Outotec Oyj, 02230 Espoo (FI)
(72) Inventor: LEPPINEN, Jaakko, FI - 02230 Espoo (FI)
(74) Representative: Kolster Oy Ab
(86) International application number: PCT/FI2011/050385
(87) International publication number: WO 2011/135184

(56) References cited:
- EP-A1- 0 597 522
- WO-A1-98/41328
- AU-B2- 593 728
- CA-A1- 2 107 963
- US-A- 3 968 032
- US-A- 4 385 038
- US-A- 4 385 038
- US-A- 4 561 970
- US-A- 5 120 353
- US-A- 5 855 770

## Description

### FIELD OF INVENTION

The invention relates to a method for recovering valuable metals, such as lead, silver and gold from the residue of an electrolytic zinc process.

### BACKGROUND OF INVENTION

In addition to zinc, zinc concentrate also contains other valuable metals such as lead, silver and gold, and the recovery of these has a remarkable significance when observing the zinc process as a whole. The behavior of these elements must be taken into account when making process changes. When metallic zinc is electrolytically produced from zinc sulfide concentrate, the concentrate is first conducted either as a whole or in parts into roasting, where the zinc sulfide of the concentrate is oxidized into oxide, because zinc oxide is easier to leach than sulfide. The major part of the zinc oxide is leached in a neutral leaching stage into zinc sulfide. In roasting, part of the concentrate forms zinc-bearing ferrite, the leaching of which requires a higher acid content than the leaching of oxides, and this leaching stage is called strong acid leaching. As a result from the leaching stages, there is obtained a zinc sulfide solution as well as an effluent that mainly contains the iron and sulfur from the concentrate, as well as the lead and valuable metals therefrom. At present, the tendency is more and more towards processes where the concentrate or at least part thereof is leached directly, without roasting.

The US patent publication 5,855,770 describes a process for recovering a secondary base metal mineral from a material containing it involving treatment of a pulp of the material with surface modifying reagent, such as a water soluble sulphide. The pulp is subjected to deaeration by introducing of a non-oxidizing gas to prevent oxidation of the reagent. In more detail, US 5,855,770 relates to a method wherein valuable metals are recovered from the residue of an electrolytic zinc process, wherein the residue from the zinc process is suspended converting the lead and silver compounds into sulphidic form by using Na₂S, NaHS, Ca(HS)₂ or H₂S stoichiometrically and further flotation, wherein the sulphidizing and flotation processes are controlled electrochemically. However, publication US 5,855,770 is silent about the parameters of the present invention, wherein sulphidizing and flotation processes are controlled electrochemically.

The US patent publication 5,120,353 describes some methods for recovering precious metals in connection with the zinc process. According to said publication, strong acid leaching is carried out in conditions where the iron is mainly in a solution, and the created precipitate contains the elemental sulfur, as well as a small quantity of sulfides that remain undissolved. The precipitate can be conducted directly to pyrometallurgical treatment, or sulfur can be flotated from the precipitate, whereafter the non-flotated residue containing lead sulfate and precious metals can be conducted to pyrometallurgical treatment.

The US patent publication 3,968,032 describes a method for recovering lead and zinc from a zinc process residue by flotation. In the residue, lead is mainly present as sulfate, and silver is mainly present as sulfide. The method is based on selecting the flotation conditions so that both lead and silver are flotated. If the quantity of zinc and elemental sulfur in the residue is high, flotation is carried out in two stages, when it can normally be carried out in one single stage. When flotation is carried out in two stages, the precipitate is suspended and conducted first to rougher flotation, where collectors are added therein. In rougher flotation, silver, sulfur and zinc are flotated, but lead is not flotated. The overflow from the flotation is conducted to scavenger flotation and cleaner flotation, so that there is obtained a concentrate rich in silver. The pH of the cleaner flotation stage is adjusted to be within the range 2 - 4.5. After the first flotation stage, the residue is conducted to a second flotation stage, into which there also is fed a sulfidizing agent, such as sodium sulfide, for activating the lead sulfate, and the employed flotation reagents are xanthates and/or dithiophosphates for flotating the lead. If both lead and silver should be recovered from the residue with a high yield, said lead and silver must, according to the method, be flotated separately, i.e. the method requires a two-stage flotation.

Yet another known method for separating lead, silver and gold from the residues of a zinc process is introduced in the publication US 4,385,038. According to the described method, ferritic leach residue obtained from a neutral leaching stage is processed by conducting it to a sulfidizing stage. After the sulfidizing reactions have taken place, the obtained slurry is conducted to a flotation stage, and the sulfides are flotated. In the flotation stage, the sulfidic phase, the ferritic phase and the solution phase are separated. The aim is to obtain the lead and silver sulfides in the flotation concentrate as completely as possible.

There are some drawbacks connected to the above described method for separating valuable metals, for instance the fact that harmful reoxidation of metal sulfides takes place during flotation. This means that they are no more flotated for example when the oxidation potential grows sufficiently high in an easily aerated flotation cell. In that case the obtained result is for example lead sulfate. It is a well-known fact that electrochemical phenomena have a remarkable significance in the flotation of sulfide minerals. If the potential is too negative, the collector chemicals cannot be adhered. If, on the other hand, the oxidation space is too high when the potential is too positive, the flotation of sulfide minerals is weakened as a result of the oxidation of the minerals. Particularly in this case, where the lead and silver sulfide minerals are synthetically made, oxidation takes place extremely rapidly owing to their structure and finely divided composition. When air is used as a flotation gas in an electrochemically uncontrolled space, the flotation properties of lead and silver sulfides are quickly weakened, and flotation cannot take place.

The flotation of a metal sulfate, such as lead sulfate, is extremely troublesome, which makes the recovery of valuable metals even more difficult.

### OBJECT OF INVENTION

The object of the invention is to introduce a new and more efficient way to separate valuable metals, such as gold, lead and silver, from the leaching residue of zinc.

### SUMMARY OF INVENTION

By means of a method according to the invention, it is possible to maximize the recovery of valuable metals, such as gold, silver and lead, from the residue of an electrolytic zinc process, such as strong acid leaching and neutral leaching. The advantages brought about by the method are remarkable, and an increase of more than 50% in the yield can be achieved, depending on the valuable metal to be separated. A particularly remarkable advantage is achieved with lead, the finely divided sulfide of which is easily oxidized in an aerated flotation slurry, but a remarkable increase in yield is also achieved with silver.

The essential characteristic features of the invention are apparent from the appended claims.

The method according to the invention relates to recovering valuable metals, such as lead, silver and gold from the residue of an electrolytic zinc process,
so that the residue from the zinc process is suspended and sulfidized in order to convert the lead and silver compounds into sulfidic form, and further flotated for creating a flotation concentrate containing valuable metals, in which case the sulfidizing and flotation processes are electrochemically controlled, so that the content of the sulfide ions to be fed into the sulfidizing stage is by means of the redox potential adjusted to be on a level where the grain size of the created valuable metal sulfides is sufficient for flotating them, and the redox potential of the flotation stage is adjusted to be within a range where the collector chemical is adhered to the mineral to be flotated, but sulfides are not oxidized. By means of the electrochemical adjusting concept according to the invention, it is possible to create optimal flotation conditions for sulfide minerals, in which collector chemicals are adhered to desired mineral surfaces, but harmful oxidation of the sulfide minerals does not take place.

According to an embodiment of the invention, the redox potential of the process is measured and adjusted in the sulfidizing stage, in at least one stage. According to the invention, the redox potential is measured and adjusted in the flotation stage, in at least one stage. The redox potential of the slurry is measured by precious metal electrodes, or by metal, glassy carbon or mineral electrodes, or by combinations thereof.

According to an embodiment of the invention, a suitable reducing chemical is added in the slurry in the flotation stage in order to adjust the redox potential to a desired level. According to another embodiment of the invention, inert gas is fed in the flotation stage in order to adjust the redox potential to a desired level. As an alternative, according to the invention a gas mixture is fed in the flotation stage, said gas mixture containing partly inert gas and partly air.

According to an embodiment of the invention, at least part of the gas to be removed from the flotation stage is recirculated back to flotation. Thus the gas to be removed is made use of in adjusting the flotation.

According to an embodiment of the invention, at least part of the metal-bearing flotation concentrate created in the flotation stage, for example 10-30% thereof, is returned back to sulfidation. According to a preferred embodiment of the invention, the flotation of valuable metals is carried out in one stage.

According to the invention, the quantity of the sulfide ion to be fed in the sulfidizing stage is stoichiometric with respect to the quantity of silver and lead contained in the slurry. Sulfide ions are conducted to the solution by using at least one chemical from the following group: Na₂S, NaHS, Ca(HS)₂ and H₂S.

According to an embodiment of the invention, the pH is adjusted to be within the range 1-4. According to an embodiment of the invention, when using sulfide mineral collector chemicals that are typical in flotation, the redox potential is adjusted to be within the range -50 - +350 mV vs. SHE. According to the invention, in sulfidizing the redox potential is adjusted to be within the range -250 - -0 mV vs. SHE. In the above described conditions, an advantageous yield of valuable metals is obtained.

### LIST OF DRAWINGS

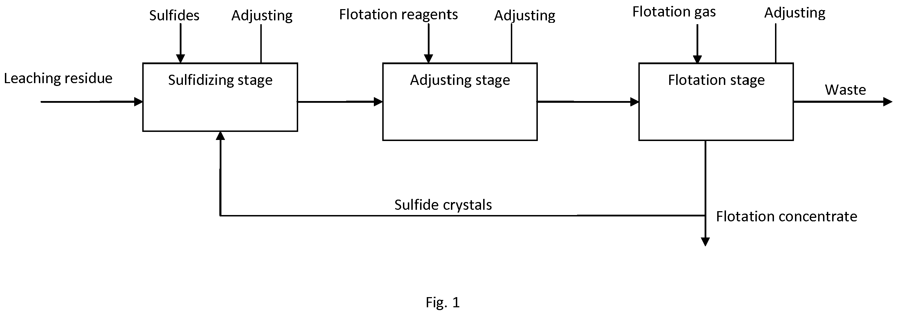

An arrangement according to the invention is described in more detail with reference to the appended drawing, where
Figure 1 is a block diagram illustrating a method according to the invention.

### DETAILED DESCRIPTION OF INVENTION

Figure 1 illustrates a method according to the invention for recovering valuable metals from the leaching residue obtained from the electrolytical production of zinc by utilizing a sulfidation-flotation method. Typically the method is applied to the residue from so-called strong acid leaching, the major part of the iron being dissolved in the preceding process stages, but the method can also be applied to other residues of the zinc process, or to intermediate products, such as the residue from neutral leaching. In these residues, lead is generally present in sulfate form, silver in sulfate or chloride compounds and gold mainly in elemental form. According to the invention, lead and silver compounds are converted to corresponding sulfides in a closed reactor, by using a stoichiometric quantity of sulfide with respect to lead and silver. The sulfide may be for example in one of the following forms: Na₂S, NaHS Ca(HS)₂ or H₂S. The reactions that take place in sulfidizing are as follows:

PbSO₄(s) + Na2S(aq) = PbS(s) + Na₂SO₄(aq)

2 AgCl(s) + Na₂S(s) = Ag₂S(s) + 2NaCl(aq)

From the sulfidizing stage, the solid slurry is conducted to a flotation stage, where flotation is carried out in flotation cells by using typical collector chemicals for sulfide minerals, frothing agents and, when necessary, also depressing reagents. Among the collector chemicals suitable for said stages are for example xanthates, dithiophosphates and dithiophosphinates. In the flotation process, by controlling the pH and the oxidation-reduction state, from the slurry there are separated PbS and Ag₂S, which form the corresponding Pb-Ag-concentrate. The major part of gold is also concentrated in this connection. Generally the flotation stage includes rougher flotation, scavenger flotation and cleaner flotation, by means of which the aim is to maximize both the yield and the product content. The flotation of the valuable metals to be recovered generally takes place in one single stage, whereas the method referred to in connection with the prior art requires two separate stages for recovering silver and lead.

The electrochemical adjusting concept according to the invention makes it possible to create optimal flotation conditions for sulfide minerals, wherein collector chemicals are adhered to desired mineral surfaces, but harmful oxidation of sulfide minerals does not take place. The sulfides formed in sulfidation, such as sulfides of lead, silver and possibly zinc are so-called synthetic sulfides, and not natural minerals. Synthetic sulfides are formed in connection with precipitation, and they are extremely finely divided and therefore easily reoxidized. Therefore it is important that in the sulfidation and flotation stage, the redox potential is adjusted to be within the correct range. The correct redox potential depends on several different factors, such as the collector used in flotation, the concentration of the valuable metals to be recovered, and the pH of the slurry.

The process adjusting methods according to the invention to be used in flotation are described below. For controlling the oxidation-reduction state of slurry, there is used an inert gas, such as nitrogen, or a mixture of air and an inert gas. The adjusting can also be carried out by feeding in the slurry chemicals affecting the oxidation-reduction state, such as sodium sulfide, sodium hydrogen sulfide or sulfur dioxide. Suitable conditions can also be achieved by recirculating the flotation gas, typically air, so that the share of oxygen in the gas is reduced. In that case the adjusting effect is reached for example by adding a suitable quantity of fresh air in the circulating gas mixture. In the rougher flotation stage preliminary to flotation proper, flotation chemicals, such as collectors and frothing agents, are mixed in the slurry, and the pH and redox potential of the slurry are adjusted to be correct for flotation. In the rougher flotation stage and in flotation proper, the redox potential is maintained within a range where the lead sulfide and silver sulfide formed by sulfidation are not oxidized, and at the same time the electrochemical conditions are favorable for the collector chemicals to be adhered on the surfaces of the created minerals and gold. In the typical operation range of the method, with a pH of 2-4, the potential measured by a platinum electrode is within the range -50-350 mV vs. SHE. However, it is pointed out that also the type of the collector chemical used in the flotation process, as well as its content in the solution, affects the redox potential.

The electrochemical adjusting method is utilized in the sulfidizing stage by using an optimal sulfide level in the solution. From the solution, there is measured the redox potential, which correlates with the active sulfide-ion content of the solution. If the sulfide content in the sulfidizing stage is high, it is strongly indicated by a negative potential. If, on the other hand, the sulfide level is low, the potential value gets more positive readings. With respect to the speed of precipitation, it is advantageous to use high sulfide ion content in the solution, but the drawback is that the created sulfide precipitate is too finely divided for flotation. This condition favors the creation of new nuclei, and to a lesser extent the growth of crystals. If, on the other hand, the sulfide level is too low, the conditions for crystal growth are better, but the sulfidizing process becomes too slow. Owing to these facts, electrochemical adjusting produces sulfide crystals that are sufficiently coarse-grained for the flotation process, at a rate that is sufficiently fast for the overall process. Apart from providing suitable conditions, crystal growth is also improved by adding in the flotation process lead sulfide and silver sulfide as crystal nuclei, for instance by recirculating part of the flotation concentrate to precipitation, for example 10-30% of the flotation concentrate.

### EXAMPLES

### Example 1

After strong acid leaching, the sulfidation and flotation of the residue was studied by means of laboratory tests. The composition of the supply material, with respect to the main components, was as follows: Pb 19.3%, Ag 720 g/t, Au 2.3 g/t. In addition, the material was mainly composed of zinc and iron compounds, gypsum and silicate minerals.

After strong acid leaching, the sulfidation of the residue was carried out in a closed reactor, at the temperature of 50° C, with a pH of 1.5-3, by using a stoichiometric quantity of sulfide with respect to lead, which sulfide was fed in the slurry during 3 hours as a 2.5 M solution.

After sulfidation, the slurry was subjected to flotation for concentrating lead, silver and gold. The flotation process consisted of a rougher flotation stage and four cleaner flotation stages. In Experiment 1, electrochemical adjusting was not applied in flotation, but it was carried out normally, with air as the flotation gas. In the experiment, the pH of the slurry was adjusted to be 2.0, and the employed collector reagent was 450 g/t Aerophine 3418A (dithiophosphate derivative), and the employed frothing agent was 60 g/t Dowfroth 250. The rougher flotation stage lasted 16 minutes, and the cleaner flotation stages lasted 5-10 minutes. In the beginning of the flotation process, the redox potential measured by a platinum electrode was 120 mV vs. SHE, but as the aeration began, it rose rapidly to the level +450-600 mV vs. SHE. In this case, the yield of lead in the fourth cleaner concentrate was 41.0%, and the content in the concentrate was 24.7%. The yield of silver was 77.3%, and its content in the concentrate was 1740 g/t. The yield of gold was 66.7%, and its content in the concentrate was 4.8 g/t.

### Example 2

In Experiment 2, flotation was otherwise carried out in the same way as in Example 1, but in the flotation stage, the potential was adjusted, by means of the flotation gas composition and by adding NaHS solution, up to the value +200 mV vs. SHE.

Now the yield of lead in the fourth cleaner concentrate was 87.9%, and the content in the concentrate was 56.2%. For silver, the corresponding readings were: yield 90.6% and 2160 g/t. The yield of gold was 77.5%, and its content in the concentrate was 5.8 g/t.

The examples show that by adjusting the slurry potential in the flotation stage to a suitable range, the harmful oxidation of sulfide minerals could be prevented, at the same time, however, maintaining such electrochemical conditions that were favorable for flotation. Depending on the collector chemical and its content, the redox potential suitable for the pH range 2-4 is typically within the range -50 - +350 mV vs. SHE.

## Claims

1. A method for recovering valuable metals, such as lead, silver and gold from the residue of an electrolytic zinc process, wherein the residue from the zinc process is suspended and sulfidized for converting the lead and silver compounds into sulfidic form, and further flotated for forming a flotation concentrate that contains valuable metals, **characterized in that** the sulfidizing and flotation processes are controlled electrochemically, so that the content of the sulfide ions fed in the sulfidizing stage is adjusted by means of the redox potential to a level within the range -250 - -0 mV vs. SHE where the grain size of the created valuable metal sulfides is sufficient for flotating them, and that when using typical collector chemicals of sulfide minerals in the flotation, the redox potential in the flotation stage is adjusted to be within a range -50 - +350 mV vs. SHE, where the collector chemical is adhered to the mineral to be flotated, but the sulfides are not oxidized.

2. A method according to claim 1, **characterized in that** in the sulfidizing stage, the redox potential of the process is measured and adjusted at least in one stage.

3. A method according to claim 1, **characterized in that** in the flotation stage, the redox potential is measured and adjusted in at least one stage.

4. A method according to claim 1, 2 or 3, **characterized in that** the redox potential of the slurry is measured by valuable metal or metal electrodes, glassy carbon or mineral electrodes, or by combinations thereof.

5. A method according to claim 1, **characterized in that** in the flotation stage, a suitable reducing chemical is added in the slurry for adjusting the redox potential to a desired level.

6. A method according to claim 1, **characterized in that** inert gas is fed in the flotation stage for adjusting the redox potential to a desired level.

7. A method according to claim 1, **characterized in that** in the flotation stage, there is fed a gas mixture containing partly inert gas and partly air.

8. A method according to claim 1, **characterized in that** at least part of the gas to be removed from the flotation stage is recirculated back to flotation.

9. A method according to claim 1, **characterized in that** at least part of the metallic flotation concentrate created in the flotation stage is returned back to sulfidation.

10. A method according to claim 9, **characterized in that** 10 - 30% of the metallic flotation concentrate created in the flotation stage is returned back to the sulfidizing stage.

11. A method according to claim 1, **characterized in that** the flotation of valuable minerals is carried out in one single stage.

12. A method according to claim 1, **characterized in that** the quantity of the sulfide ions to be fed in the sulfidizing stage is stoichiometric with respect to the quantity of the silver and lead contained in the slurry.

13. A method according to claim 1 or 12, **characterized in that** the sulfide ions are conducted in the solution by using at least one chemical from the following group: Na₂S, NaHS, Ca(HS)₂ and H₂S.

14. A method according to claim 1, **characterized in that** the pH is adjusted to be within the range 1-4.

## Patentansprüche

1. Verfahren zur Wiedergewinnung von wertvollen Metallen wie Blei, Silber und Gold aus dem Rückstand eines elektrolytischen Zinkverfahrens, wobei der Rückstand aus dem Zinkverfahren suspendiert und sulfidiert wird zum Umwandeln der Blei- und Silberverbindungen in Sulfidform, und ferner flotiert wird zur Bildung eines Flotationskonzentrats, das wertvolle Metalle enthält, **gekennzeichnet dadurch, dass** die Sulfidierungs- und Flotationsverfahren elektrochemisch gesteuert werden, so dass der Gehalt der in der Sulfidierungsstufe zugeführten Sulfidionen mittels des Redoxpotentials auf ein Niveau im Bereich von -250 bis -0 mV gegenüber SHE eingestellt wird, wo die Korngröße der erzeugten wertvollen Metallsulfide ausreicht, um sie zu flotieren, und dass bei der Verwendung typischer Kollektorchemikalien von Sulfidmineralien in der Flotation das Redoxpotential in der Flotationsstufe so eingestellt wird, dass es in einem Bereich von -50 bis +350 mV gegenüber SHE liegt, wo die Kollektorchemikalie an das zu flotierende Mineral angehaftet wird, aber die Sulfide nicht oxidiert werden.

2. Verfahren nach Anspruch 1, **gekennzeichnet dadurch, dass** in der Sulfidierungsstufe das Redoxpotential des Verfahrens mindestens in einer Stufe gemessen und eingestellt wird.

3. Verfahren nach Anspruch 1, **gekennzeichnet dadurch, dass** in der Flotationsstufe das Redoxpotential in mindestens einer Stufe gemessen und eingestellt wird.

4. Verfahren nach Anspruch 1, 2 oder 3, **gekennzeichnet dadurch, dass** das Redoxpotential der Aufschlämmung durch wertvolle Metall- oder Metallelektroden, Glaskohlenstoff- oder Mineralelektroden, oder durch Kombinationen davon, gemessen wird.

5. Verfahren nach Anspruch 1, **gekennzeichnet dadurch, dass** in der Flotationsstufe eine geeignete reduzierende Chemikalie in die Aufschlämmung zur Einstellung des Redoxpotentials auf ein gewünschtes Niveau zugegeben wird.

6. Verfahren nach Anspruch 1, **gekennzeichnet dadurch, dass** Inertgas in der Flotationsstufe zugeführt wird, um das Redoxpotential auf ein gewünschtes Niveau einzustellen.

7. Verfahren nach Anspruch 1, **gekennzeichnet dadurch, dass** in der Flotationsstufe ein Gasgemisch, das teilweise Inertgas und teilweise Luft enthält, zugeführt wird.

8. Verfahren nach Anspruch 1, **gekennzeichnet dadurch, dass** mindestens ein Teil des aus der Flotationsstufe zu entfernenden Gases zurück zur Flotation rezirkuliert wird.

9. Verfahren nach Anspruch 1, **gekennzeichnet dadurch, dass** mindestens ein Teil des in der Flotationsstufe erzeugten metallischen Flotationskonzentrats zur Sulfidierung zurückgeführt wird.

10. Verfahren nach Anspruch 1, **gekennzeichnet dadurch, dass** 10 - 30% des in der Flotationsstufe erzeugten metallischen Flotationskonzentrats in der Sulfidierungsstufe zurückgeführt werden.

11. Verfahren nach Anspruch 1, **gekennzeichnet dadurch, dass** die Flotation von wertvollen Mineralien in einer einzelnen Stufe durchgeführt wird.

12. Verfahren nach Anspruch 1, **gekennzeichnet dadurch, dass** die Menge der in der Sulfidierungsstufe zuzuführenden Sulfidionen in Bezug auf die Menge des in der Aufschlämmung enthaltenen Silbers und Blei stöchiometrisch ist.

13. Verfahren nach Anspruch 1 oder 12, **gekennzeichnet dadurch, dass** die Sulfidionen in der Lösung unter Verwendung mindestens einer Chemikalie aus der folgenden Gruppe durchgeführt wird: Na₂S, NaHS, Ca(HS)₂ und H₂S.

14. Verfahren nach Anspruch 1, **gekennzeichnet dadurch, dass** der pH-Wert so eingestellt wird, dass er im Bereich 1 - 4 liegt.

## Revendications

1. Procédé de récupération de métaux précieux, tels que le plomb, l'argent et l'or, à partir du résidu d'un procédé de zingage électrolytique, dans lequel le résidu issu du procédé de zingage est mis en suspension et sulfuré pour convertir les composés de plomb et d'argent en une forme sulfurée, et en outre mis en flottation pour former un concentré de flottation qui contient des métaux précieux, **caractérisé en ce que** les procédés de sulfuration et de flottation sont contrôlés de manière électrochimique, de sorte que la teneur en ions sulfure introduits dans l'étage de sulfuration soit ajustée au moyen du potentiel redox à un niveau situé dans la plage allant de -250 à -0 mV par rapport à une ESH où la taille des grains des sulfures de métaux précieux créés est suffisante pour les faire flotter, et **en ce que** quand des produits chimiques collecteurs classiques de minéraux sulfure sont utilisés dans la flottation, le potentiel redox dans l'étage de flottation est ajusté de façon à être situé dans une plage allant de -50 à +350 mV par rapport à une ESH, où le produit chimique collecteur amené à adhérer au minéral à faire flotter, mais les sulfures ne sont pas oxydés.

2. Procédé selon la revendication 1, **caractérisé en ce que** dans l'étage de sulfuration, le potentiel redox du procédé est mesuré et ajusté au moins dans un étage.

3. Procédé selon la revendication 1, **caractérisé en ce que** dans l'étage de flottation, le potentiel redox est mesuré et ajusté dans au moins un étage.

4. Procédé selon la revendication 1, 2 ou 3, **caractérisé en ce que** le potentiel redox de la suspension est mesuré par des électrodes de métal précieux ou de métal, des électrodes de carbone vitreux ou de minéral, ou par des combinaisons de celles-ci.

5. Procédé selon la revendication 1, **caractérisé en ce que** dans l'étage de flottation, un produit chimique réducteur approprié est ajouté à la suspension pour ajuster le potentiel redox à un niveau souhaité.

6. Procédé selon la revendication 1, **caractérisé en ce qu'**un gaz inerte est introduit dans l'étage de flottation pour ajuster le potentiel redox à un niveau souhaité.

7. Procédé selon la revendication 1, **caractérisé en ce que** dans l'étage de flottation, il est introduit un mélange gazeux contenant partiellement un gaz inerte et partiellement de l'air.

8. Procédé selon la revendication 1, **caractérisé en ce qu'**au moins une partie du gaz à retirer de l'étage de flottation est remise en circulation vers la flottation.

9. Procédé selon la revendication 1, **caractérisé en ce qu'**au moins une partie du concentré métallique de flottation créé dans l'étage de flottation est renvoyée à la sulfuration.

10. Procédé selon la revendication 9, **caractérisé en ce que** 10 à 30 % du concentré métallique de flottation créé dans l'étage de flottation est renvoyé à l'étage de sulfuration.

11. Procédé selon la revendication 1, **caractérisé en ce que** la flottation des minéraux précieux est réalisée dans un unique étage.

12. Procédé selon la revendication 1, **caractérisé en ce que** la quantité des ions sulfure à introduire dans l'étage de sulfuration est stoechiométrique par rapport à la quantité de l'argent et du plomb contenue dans la suspension.

13. Procédé selon la revendication 1 ou 12, **caractérisé en ce que** les ions sulfure sont conduits dans la solution en utilisant au moins un produit chimique appartenant groupe suivant : Na₂S, NaHS, Ca(HS)₂ et H₂S.

14. Procédé selon la revendication 1, **caractérisé en ce que** le pH est ajusté de façon à être situé dans la plage allant de 1 à 4.
